# EUROPÄISCHE PATENTANMELDUNG

(11) **EP 0 743 012 A2**
(43) Veröffentlichungstag der Anmeldung: **20.11.1996**
(21) Anmeldenummer: 96810310.1
(22) Anmeldetag: 15.05.1996
(51) Int. Cl.: A23B 4/06, A23B 4/26, A23B 4/32

(54) **Kühlraum für Tumbler zur gekühlten Fleischbearbeitung**

(30) Priorität: 16.05.1995 CH 1421/95
(71) Anmelder: Widmer, René, 4852 Rothrist (CH)
(72) Erfinder: Widmer, René, 4852 Rothrist (CH)
(74) Vertreter: Patentanwaltsbüro Feldmann AG

(57) **Zusammenfassung**

An einem Tumbler (1) für die Fleischbearbeitung, der mit einer Drehtrommel (2) und einer Antriebseinheit versehen ist, befestigt man eine lösbare Frontwand (11) , die von einem Einfüllkragen (7) durchsetzt ist. So lässt sich der Tumbler (1) frei bewegen und in eine mobile Kühlbox (10) einfahren, die von der Frontwand (11) dichtend verschlossen wird. In der Kühlbox ist ein Kühlaggregat fest angeordnet.

Dies ergibt eine logistisch praktische Lösung, die auch problemlos hygienisch gereinigt werden kann.

## Beschreibung

Die vorliegende Erfindung betrifft einen Kühlraum oder Kühlgehäuse mit darin untergebrachtem Tumbler zur gekühlten Fleischbearbeitung, bestehend aus einem Tumbler, der eine Drehtrommel und einen mit der Drehtrommel wirkverbundenen Einfüll- oder Dichtungskragen, sowie ein im Kühlraum angeordnetes Kühlaggregat umfasst.

Frischfleisch wird vor der Weiterverarbeitung meist in einem Tumbler gepoltert oder massiert. Hierzu stellt man die Tumbler in ein Kühlhaus. Hier nehmen sie einerseits viel Platz weg und stören die logistischen Abläufe in fleischbearbeitenden Betrieben. Es ist daher üblich, Tumbler transportabel zu gestalten, das heisst auf Rollen zu lagern.

Eine weitere Verbesserung besteht darin, Tumbler mit gekühlten Drehtrommeln auszuführen, wie dies in den DE-A-28 18 862 und DE-A-27 12 237 vorgeschlagen wird. Dies ist technisch aufwendig, da die Trommeln doppelwandig ausgestaltet und mit entsprechenden Führungen und Dichtungen für die Kühlmittelzufuhr ausgerüstet werden müssen. Undichtigkeiten der Trommel können zu Kühlmittelleckagen führen und das Fleisch verderben.

Diese Problematik wurde erkannt und als Lösung schlägt die EP-A-0 284 786 vor, statt die Drehtrommel direkt zu kühlen, diese in einer stehenden Kammer unterzubringen, die von einem aussen angebrachten Kühlaggregat über ein in der Kammer angeordnetes Kühlelement gekühlt wird. Energetisch vorteilhaft scheint zwar das relativ geringe Volumen, das zu kühlen ist, doch relativiert sich dies durch die Notwendigkeit, die Drehtrommel innen zu belüften und durch die isolierte Kammerwand hindurch anzutreiben. Die Frischluft kommt so filtriert oder unfiltriert von der warmen Umgebung durch die hohle Antriebswelle in die Drehtrommel, was höchst unerwünscht ist.

Ein weiterer, die Hygiene beeinflussender Faktor, der der letztgenannten Lösung anhaftet, ist, dass die Drehtrommel durch eine Oeffnung in der Vorderwand der Kühlkammer hindurch zu füllen und zu entleeren ist. Dabei können Fleischteile zwischen den Kragen an der Drehtrommel und die Kühlraumwand in der Kühlkammer fallen und insbesondere auch flüssige Anteile einsickern. Ohne eine gelegentliche Demontage kann die Kühlkammer kaum gereinigt werden.

Die vorliegende Erfindung stellt sich daher die Aufgabe, eine die Hygiene verbessernde, einfache und kostengünstige Lösung zu schaffen, wobei bereits vorhandene Tumbler mit geringem Aufwand umgebaut werden können.

Diese Aufgabe löst ein in einem Kühlraum untergebrachter Tumbler, der die Merkmale des Patentanspruches 1 aufweist.

Die Lösung wird darin gesehen, dass man den Kühlraum als Kühlbox in der Grösse des gesamten Tumblers gestaltet, in den der Tumbler gleich einem Auto in eine Garage einfahrbar ist, wobei die "Garagentüre" am Tumbler befestigt ist und vom Dichtungskragen durchsetzt wird. Damit ist die Drehtrommel füll- und entleerbar, ohne die Kühlbox zu öffnen und Verunreinigungen können nicht in die Kühlbox gelangen. Da mit dem Tumbler auch die Frontwand von der Kühlbox entfernt ist, ist die Reinigung völlig problemlos. Weil ferner die den gesamten Tumbler und damit auch die die Drehtrommel antreibende Hohlwelle, durch die die Belüftung erfolgt, innerhalb der Kühlbox angeordnet ist, kann auch die Frischluft in der Kühlbox angesogen werden.

Um ein einfaches Manövrieren des Tumblers zu erreichen, werden gemäss den Ansprüchen 2-5 einerseits Rollen am Tumbler und andererseits Positionierungsmittel an der Kühlbox vorgeschlagen. Zusätzliche vorteilhafte Ausgestaltungsformen des Erfindungsgegenstandes gehen aus den weiteren abhängigen Patentansprüchen hervor und deren Bedeutung geht aus der nachfolgenden Beschreibung hervor.

In den anliegenden Zeichnungen sind verschiedene Ausführungsbeispiele des Erfindungsgegenstandes vereinfacht schematisch dargestellt. Es zeigt:

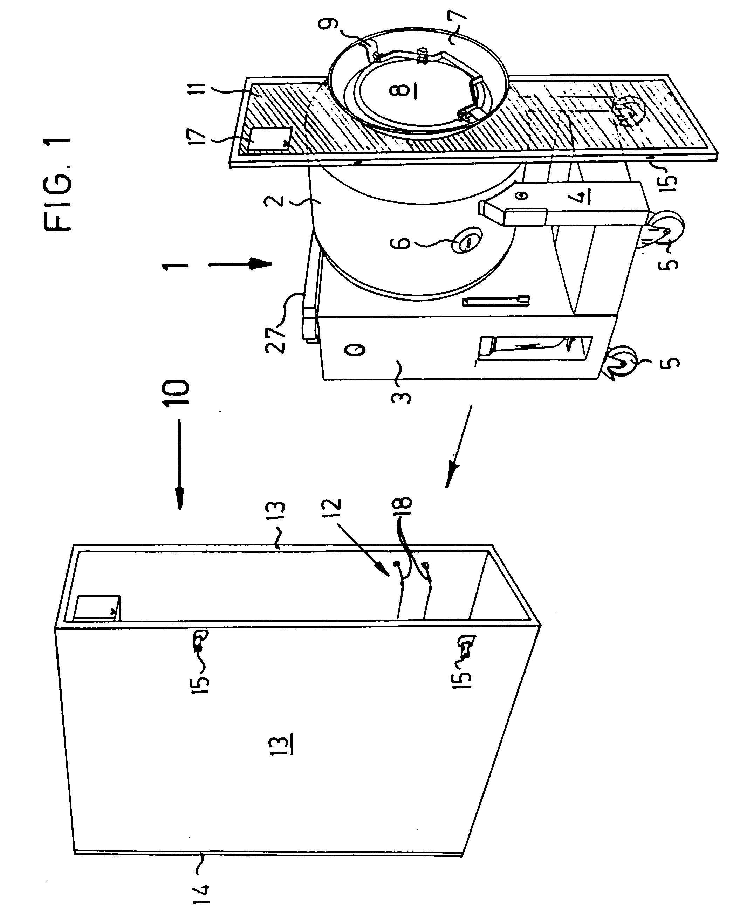

- Figur 1: die erfindungsgemässe Anordnung in perspektivischer Darstellung mit ausgefahrener Tumblereinheit;
- Figur 2: die rückwärtige schematische Ansicht einer Kühlboxeinheit und
- Figur 3: eine Kombination mehrerer Kühlboxeinheiten ebenfalls in perspektivischer Darstellung.

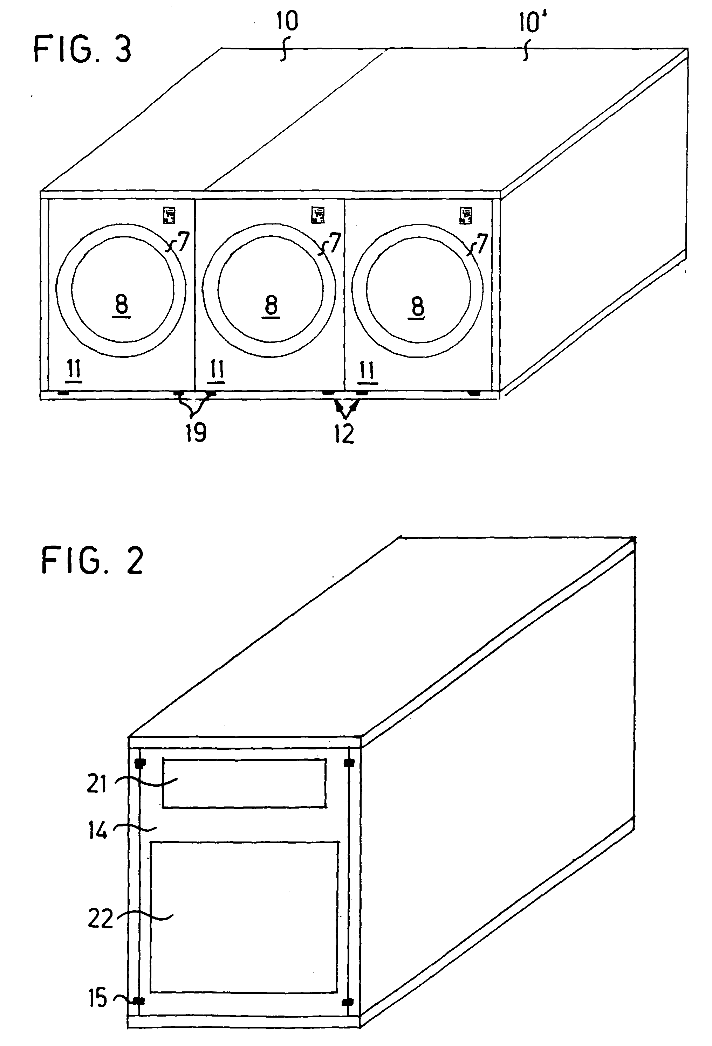

Die erfindungsgemässe Anordnung besteht im wesentlichen aus einem handelsüblichen Tumbler 1 und einem speziell darauf abgestimmten Kühlraum, der der Grösse des Tumblers angepasst ist und als Kühlbox 10 bezeichnet wird. Das markanteste Bauteil des Tumblers ist die Drehtrommel 2, die mit dem zu bearbeitenden Fleisch beladbar ist. Zum Bearbeiten des Fleisches wird die Drehtrommel 2 in Rotation versetzt. Hierzu dient die Antriebseinheit 3, die auf die nicht dargestellte zentrale Antriebswelle wirkt, durch die der Innenraum der Drehtrommel 2 mit Frischluft gespiesen wird. Gelagert ist die Drehtrommel 2 einerseits wie bereits erwähnt auf der zentralen Welle und andererseits ist die Drehtrommel 2 vorderseitig auf Abstützungen 4 rollend oder gleitend gelagert. Die frontseitig angebrachte Einfüllöffnung der Drehtrommel ist mit einem Trommeldeckel 8 mittels einem Verriegelungsverschluss 9 verschliessbar. Die Einfüllöffnung 7 wird von einem Einfüllkragen umgeben. Dieser Einfüllkragen ist dichtend durch die mobile Frontwand 11 hindurch geführt. Hierzu kann die mobile Frontwand 11 mit einer entsprechenden Gleitringdichtung versehen sein. Die Frontwand 11 passt exakt auf die Kühlbox 10 und verschliesst diese dichtend, wenn der Tumbler 1 in die Kühlbox hineingefahren ist. Die Kühlbox 10 weist allseitig thermisch isolierte Wände auf, wobei vorteilhafterweise lediglich die Frontwand 11 sowie die Rückwand 14 entfernbar sind. Auf der Innenseite sind an den Seitenwänden 13 Positionierungsmittel 12 in der Gestalt von Führungsschienen 18 angebracht. Diese erleichtern ein positioniertes exaktes Einfahren der Tumblereinheit in die Kühlbox 10, ohne dass sich diese verkantet oder die Seitenwände zerbeult. An den Seitenwänden 13 sind aussen Schnellverschlüsse 15 angeordnet, um die dichtende Frontwand 11 kraftschlüssig an die Stirnseiten der Wände der Kühlbox 10 anzupressen. Entsprechend sind auch an der Frontwand 11 entsprechende Teile des Schnellverschlusses 15 angebracht. Ueblicherweise ist der Tumbler 1 auf Fahrrollen 5 gelagert. Zur präzisen Einführung des Tumblers 1 in die Kühlbox 10 können auch in der Kühlboxbodenfläche Führungsbahnen 19 angeordnet sein, wie dies in den Figuren 2 und 3 ersichtlich ist. Vorteilhafterweise wird man diese Führungsbahnen 19 für den Einlauf leicht verbreitet gestalten.

In der Figur 2 ist eine anders dimensionierte Kühlbox 10 in rückseitiger Ansicht dargestellt. Die Rückwand 14 weist zwei Oeffnungen auf. Die obere Oeffnung ist von einem eingeschobenen Kühlaggregateinschub 21 dichtend abgedeckt. Die hier verschlossene Kontrollöffnung 22 dient dem Zugang zur Antriebseinheit 3 des Tumblers 1, wenn sich dieser in der Kühlbox 10 befindet.

Oben am Gehäuse der Antriebseinheit 3 ist ein Schwenkarm 27 befestigt, an dem eine Steuerkontrolleinheit angebracht ist. Die Steuerkontrolleinheit kann durch eine Oeffnung 17 in der Frontwand 11 dichtend nach aussen geführt sein, falls dies erwünscht ist. Meist genügt es jedoch, wenn das Display der Steuereinheit einsehbar ist. Die Frontwand 11 kann wie die gesamte Kühlbox 10 aus einem hochisolierten Material im Sandwichbaustil gefertigt sein oder auch als mehrfach verglaste, isolierte Wand gestaltet sein. Im letzteren Fall erübrigt sich eine Oeffnung zur Durchführung der Steuereinheit.

Wie in der Figur 3 schematisch dargestellt, lassen sich die erfindungsgemässen Kühlboxen normiert gestalten, so dass sich diese dicht nebeneinander aufstellen lassen oder sogar miteinander verbunden werden können. In der Figur 3 ist eine Kühlbox 10 als Einzelelement und eine Kühlbox 10' als Zweierkühlbox dargestellt. Lassen sich in einer Kühlbox mehrere Tumbler einschieben, so weisen die je eine eigene Frontwand 11 auf. Die Frontwände 11 ergeben somit eine Modulgrösse. Bei einer Zweierkühlbox 10' genügt in diesem Falle ein einziges, gemeinsames Kühlaggregat, womit nochmals Kosten gespart werden können.

Dank der Anordnung des Tumblers vollständig innerhalb der Kühlbox ist die angesaugte Luft zur Belüftung der Trommel 2 bereits gekühlt. Die nachströmende Luft lässt sich über einen Filter (in der Zeichnung nicht dargestellt) und ein Ventil von der Aussenluft nachsaugen.

Ferner kann aus energetischen Gründen die Antriebseinheit 3 isoliert sein.

In einer besonders preiswerten Ausführung ist es auch möglich, die Kühlbox ohne Boden zu gestalten. Dies erlaubt auch die kinematische Umkehrung, indem die Kühlbox auf Räder gestellt werden kann und sich über den stehenden Tumbler schieben lässt. Eine weitere Variante wäre, den Tumbler auf eine Art Schublade anzuordnen, die den isolierten Boden darstellt, so dass die Einheit aus Boden, Frontwand und Tumbler in die Kühlbox schiebbar ist. In diesem Fall bringt man die Räder vorteilhaft unter dem Boden an.

## Patentansprüche

1. In einem Kühlraum untergebrachter Tumbler (1) zur gekühlten Fleischbearbeitung, bestehend aus einem Tumbler, der eine Drehtrommel (2) mit Antriebseinheit (3) und einen mit der Drehtrommel verbundenen Dichtungs- bzw. Einfüllkragen (7), sowie ein im Kühlraum angeordnetes Kühlaggregat (21) umfasst, dadurch gekennzeichnet, dass der Kühlraum als Kühlbox (10) ausgestaltet ist, der mindestens eine lösbare Frontwand (11) aufweist, die vom mindestens einen Einfüllkragen (7) durchsetzt ist und dass mindestens ein gesamter Tumbler (1) aus der verschliessbaren Kühlbox ein- und ausfahrbar ist.

2. Kühlraum nach Anspruch 1, dadurch gekennzeichnet, dass der Tumbler (1) auf Rollen (5) gelagert ist und zusammen mit der Frontwand (11) vorderseitig ausfahrbar ist.

3. Kühlraum nach Anspruch 2, dadurch gekennzeichnet, dass die Kühlbox (10) Positionierungsmittel (12) zum ortsgenauen ein- und ausfahren des Tumblers (1) aufweist.

4. Kühlraum nach Anspruch 3, dadurch gekennzeichnet, dass die Positionierungsmittel (12) in der Bodenfläche der Kühlbox eingelassene Führungsbahnen (19) sind.

5. Kühlraum nach Anspruch 3, dadurch gekennzeichnet, dass die Positionierungsmittel an den Seitenwänden (13) der Kühlbox (10) angeordnete Führungsschienen (18) sind.

6. Kühlraum nach Anspruch 1, dadurch gekennzeichnet, dass die Rückwand (14) der Kühlbox (10) von der Kühlbox vollständig abnehmbar gehalten ist.

7. Kühlraum nach Anspruch 1, dadurch gekennzeichnet, dass in der Rückwand Mittel vorgesehen sind, mittels denen das Kühlaggregat (21) als Einschubmodul einsetzbar ist.

8. Kühlraum nach Anspruch 1, dadurch gekennzeichnet, dass die Antriebseinheit (3) für die Drehtrommel (2) mit dem ausfahrbaren Tumbler (1) fest verbunden innerhalb der Kühlbox (10) angeordnet sind.

9. Kühlraum nach Anspruch 8, dadurch gekennzeichnet, dass die Antriebseinheit (3) schall- und wärmeisoliert sind.

10. Kühlraum nach Anspruch 1, dadurch gekennzeichnet, dass die Frischluftzufuhr zur Drehtrommel (2) aus der Kühlbox (10) erfolgt.

11. Kühlraum nach Anspruch 1, dadurch gekennzeichnet, dass die Frischluftzufuhr in die Kühlbox via einen Luftfilter und ein Belüftungsventil erfolgt.

12. Kühlraum nach Anspruch 1, dadurch gekennzeichnet, dass in der Kühlbox (10') mehrere Tumbler (1) angeordnet sind.

13. Kühlraum nach Anspruch 1, dadurch gekennzeichnet, dass die Frontwand (11) so unterteilt ist, dass jedem Tumbler (1) eine eigene Frontwandpartie mit zugeordnetem Dichtungskragen (7) beigeordnet ist.

14. Kühlraum nach einem der Ansprüche 12 und 13, dadurch gekennzeichnet, dass mehreren Tumblern (1) nur ein Kühlaggregat zugeordnet ist.

15. Kühlraum nach Anspruch 1, dadurch gekennzeichnet, dass die Kühlbox auf der Aussenseite Koppelungsmittel aufweist zur Verbindung mit mindestens einer weiteren gleichartigen Kühlbox.

16. Kühlraum nach Anspruch 1, dadurch gekennzeichnet, dass die Kühlbox (10) unter Weglassung des Bodens gestaltet ist.

17. Kühlraum nach Anspruch 16, dadurch gekennzeichnet, dass die Kühlbox (10) auf Rädern gelagert ist.
